# EUROPÄISCHE PATENTSCHRIFT

(11) **EP 3 517 003 B1**
(45) Veröffentlichungstag und Bekanntmachung des Hinweises auf die Patenterteilung: **01.07.2020**
(21) Anmeldenummer: 18153303.5
(22) Anmeldetag: 24.01.2018
(51) Int. Cl.: A47J 36/10, A47J 36/38, A47J 36/06

(54) **VORRICHTUNG ZUM ZUMINDEST TLW. VERSCHLIESSEN EINER ÖFFNUNG EINES KOCHGEFÄSSES, KOCHGEFÄSSSYSTEM SOWIE KÜCHENMASCHINE**
DEVICE FOR AT LEAST PARTIAL CLOSING OF AN OPENING OF A COOKING VESSEL, COOKING VESSEL SYSTEM AND FOOD PROCESSOR
DISPOSITIF DE FERMETURE, AU MOINS EN PARTIE, D'UNE OUVERTURE D'UN RÉCIPIENT DE CUISSON, SYSTÈME DE RÉCIPIENT DE CUISSON ET ROBOT DE CUISINE

(43) Veröffentlichungstag der Anmeldung: 31.07.2019
(73) Patentinhaber: Vorwerk & Co. Interholding GmbH, 42270 Wuppertal (DE)
(72) Erfinder: Thies, Felix, 42115 Wuppertal (DE); Varnhorst, Mathias, 42349 Wuppertal (DE); Schomacher, Jutta, 42551 Velbert (DE); Sickert, Michael, 58256 Ennepetal (DE)
(74) Vertreter: Patentanwälte Bals & Vogel

(56) Entgegenhaltungen:
- EP-A1- 2 526 842
- WO-A1-2015/074720
- DE-A1-102010 017 387
- DE-A1-102014 100 967

## Beschreibung

Die Erfindung betrifft eine Vorrichtung zum zumindest tlw. Verschließen einer Öffnung eines Kochgefäßes gemäß dem Oberbegriff des unabhängigen Anspruchs 1, ein Kochgefäßsystem gemäß dem Oberbegriff des unabhängigen Anspruchs 13 sowie eine Küchenmaschine gemäß dem Oberbegriff des unabhängigen Anspruchs 14. Es sind Kochgefäße aus dem Stand der Technik bekannt, welche einen Deckel aufweisen, um Hitze und/oder Druck in dem Kochgefäß einzuschließen. Dabei ist es jedoch häufig von Nachteil, dass das Kochgefäß entweder komplett verschlossen werden muss oder der Deckel vollständig entfernt werden muss. Alternativ hat ein Nutzer in solchen Fällen oft nur die Wahl, den Deckel schräg auf das Kochgefäß aufzulegen, wobei jedoch ein Öffnungsspalt unpräzise ist und auch ein Herausspritzen von Flüssigkeit nicht verhindert ist.

Insbesondere bei automatisch oder semiautomatisch betreibbaren Küchenmaschinen ist es jedoch wünschenswert ein Kochergebnis zu vereinheitlichen und somit auch die Druck- und Hitzeverhältnisse innerhalb des Kochgefäßes möglichst definiert zu erhalten. Aus dem Stand der Technik ist es daher bspw. aus der DE 10 2014 100 967 A1 und der DE 10 2010 017 387 A1 bekannt, einen Deckel für ein Kochgefäß einer Küchenmaschine mit einer Öffnung zu versehen, auf welche ein Verschlusselement aufgesetzt werden kann, sodass ein Teil der Öffnung verschlossen ist und gleichzeitig Dampf, d. h. insbesondere Hitze und/oder Druck, aus dem Kochgefäß entweichen kann.

Bei bestimmten Druck- und/oder Hitzeverhältnissen kann es dazu kommen, dass das Verschlusselement vom Kochgefäß abhebt, wodurch eine durch einen Benutzer negativ wahrnehmbare Akustik entstehen kann. Ferner ist es wünschenswert die Öffnung vor einem unbeabsichtigten Entfernen des Verschlusselementes zu bewahren, um während des Kochvorgangs die benötigten Umgebungsbedingungen innerhalb des Kochgefäßes sicherzustellen. Druckschrift WO 2015/074720 offenbart eine Vorrichtung, bei der das Verschlusselement zusätzlich mit einem Bajonettverschluss gegen das ungewollte Abheben sicherbar ist.

Es ist eine Aufgabe der vorliegenden Erfindung voranstehende aus dem Stand der Technik bekannte Nachteile zumindest tlw. zu beheben. Insbesondere ist es eine Aufgabe der vorliegenden Erfindung einen zumindest tlw. Verschluss einer Öffnung eines Kochgefäßes, insbesondere bei einer Küchenmaschine, während des Kochvorgangs zu verbessern.

Die voranstehende Aufgabe wird gelöst durch eine Vorrichtung mit den Merkmalen des Anspruchs 1, ein Kochgefäßsystem mit den Merkmalen des Anspruchs 13 sowie eine Küchenmaschine mit den Merkmalen des Anspruchs 14.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben worden sind, selbstverständlich auch im Zusammenhang mit dem erfindungsgemäßen Kochgefäßsystem und/oder der erfindungsgemäßen Küchenmaschine und jeweils umgekehrt, sodass bezüglich der Offenbarung zu den einzelnen Erfindungsaspekten stets wechselseitig Bezug genommen wird bzw. werden kann.

Erfindungsgemäß weist die Vorrichtung zum zumindest tlw. Verschließen einer Öffnung eines Kochgefäßes ein Auflageelement auf, welches auf einem Öffnungsrand der Öffnung des Kochgefäßes zur Auflage bringbar ist. Ferner weist die Vorrichtung ein Steckelement auf, welches zumindest tlw. durch die Öffnung hindurchsteckbar ist. Das Steckelement weist ferner ein Sperrmittel auf, welches in eine Sperrposition bringbar ist, in welcher das Sperrmittel mit dem Öffnungsrand zusammenwirkt, sodass ein Herausziehen des Steckelementes verhindert ist.

Insbesondere ist das Sperrmittel somit derart am Öffnungsrand positionierbar, dass das Herausziehen des Steckelementes aus der Öffnung verhindert ist. Vorzugsweise kann somit in der Sperrposition durch das Sperrmittel ein Formschluss und/oder ein Kraftschluss herstellbar sein. Darunter, dass das Herausziehen des Steckelementes in der Sperrposition verhindert ist, kann im Rahmen der Erfindung vorzugsweise verstanden werden, dass die Vorrichtung senkrecht, d. h. parallel zu einer Mittelachse der Öffnung, vom Kochgefäß entfernt wird. Somit kann das Auflageelement vorteilhafterweise dazu dienen, dass die Vorrichtung auf dem Öffnungsrand positionierbar ist und nicht durch die Öffnung hindurchfällt. Das Sperrmittel kann entgegengesetzt zum Auflageelement wirken, sodass eine Abnahme der Vorrichtung vom Kochgefäß nur unter bestimmten Voraussetzungen möglich ist. Das Steckelement kann vorzugsweise einen Abschnitt aufweisen, welcher das Auflageelement und das Sperrmittel verbindet. Insbesondere können die Öffnung und/oder das Steckelement zylinderartig ausgebildet sein, um einen gleichmäßigen zumindest tlw. Verschluss der Öffnung zu gewährleisten. Gemäß einer nicht erfindungsgemäßen Ausführung ist ein Formschluss des Sperrmittels mit dem Öffnungsrand bspw. durch einen Bajonettverschluss denkbar, wobei an zumindest einer Seite, vorzugsweise an zwei Seiten, der Öffnung Ausnehmungen vorgesehen sind, durch welche das Sperrmittel hindurchsteckbar ist, sodass bei Verdrehung des Steckelementes und/oder der Vorrichtung das Sperrmittel unterhalb des Öffnungsrandes positionierbar ist. Ferner ist es denkbar, dass der Formschluss durch eine Kippbewegung der Vorrichtung herstellbar ist.

Dadurch, dass das Steckelement das Sperrmittel aufweist, ist es somit möglich, die Öffnung zumindest tlw. zu verschließen, sodass z. B. lediglich ein definierter Bereich oder gar kein Bereich für Dampf durchlässig ist, und gleichzeitig die Vorrichtung am Öffnungsrand zu sichern. Dadurch kann bspw. ein unabsichtliches Entfernen der Vorrichtung durch einen Benutzer verhindert sein, wenn dieser bspw. gegen die Vorrichtung stößt. Ferner kann bei einem Überdruck im Kochgefäß durch das Sperrmittel vorgegeben sein, dass sich die Vorrichtung nicht oder nur in einem bestimmten Bereich bewegt, insbesondere um den Überdruck abzulassen. Dabei kann gleichzeitig ein Spritzschutz durch die Vorrichtung erhalten bleiben, sodass auch bei Überdruck der Inhalt des Kochgefäßes nicht unkontrolliert die Vorrichtung verlässt.

Bei einer erfindungsgemäßen Vorrichtung ist es ferner denkbar, dass das Auflageelement in der Sperrposition auf einer ersten Seite des Öffnungsrandes zur Auflage bringbar ist und das Sperrmittel in der Sperrposition auf einer zweiten Seite des Öffnungsrandes positionierbar ist, sodass das Steckelement mit dem Sperrmittel und das Auflageelement den Öffnungsrand zumindest tlw. umgreifen. Vorzugsweise können das Steckelement mit dem Sperrmittel und das Auflageelement den Öffnungsrand lediglich tlw. umgreifen, sodass seitlich des Sperrmittels ein Dampfaustritt aus dem Kochgefäß ermöglicht sein kann. Insbesondere kann die Vorrichtung somit zum lediglich teilweisen Verschließen der Öffnung des Kochgefäßes ausgebildet sein. Durch das Umgreifen der Vorrichtung um den Öffnungsrand kann in einfacher Art und Weise ein Formschluss herstellbar sein, um eine Befestigungswirkung durch einen Formschluss zu erreichen. Vorzugsweise kann das Steckelement in der Sperrposition mittig, d. h. insbesondere zentriert, in der Öffnung angeordnet sein, um die Sperrwirkung des Sperrmittels zu ermöglichen. Dass das Steckelement mit dem Sperrmittel und das Auflageelement den Öffnungsrand zumindest tlw. Umgreifen, kann im Rahmen der Erfindung ferner derart verstanden werden, dass das Sperrmittel und das Auflageelement jeweils von einer Seite mit dem Öffnungsrand in Kontakt stehen oder dass lediglich das Auflageelement oder das Sperrmittel mit dem Öffnungsrand in der Sperrposition in Kontakt steht. So ist es bspw. denkbar, dass bei Auflage des Auflageelementes auf dem Öffnungsrand ein Spiel, d. h. ein Abstand des Sperrmittels zum Öffnungsrand, vorgesehen ist, im Rahmen dessen sich die Vorrichtung entlang einer Mittelachse der Öffnung bewegen kann, um insbesondere auf sich verändernde Druckverhältnisse innerhalb des Kochgefäßes reagieren zu können. Somit kann durch das Umgreifen des Steckelementes mit dem Sperrmittel und des Auflageelementes um den Öffnungsrand gleichzeitig ein definiertes Kochergebnis begünstigt sein. Insbesondere kann das Sperrmittel zumindest ein Sperrelement, vorzugsweise in Form eines Sperrhakens, aufweisen, welches in der Sperrposition den Öffnungsrand hintergreifen und dadurch ein Herausziehen des Steckelementes aus der Öffnung, insbesondere formschlüssig, verhindern kann. Das, insbesondere jedes, Sperrelement kann vorteilhafterweise eine Länge von unter 5 mm, vorzugsweise von unter 4mm, besonders bevorzugt von unter 2 mm aufweisen.

Erfindungsgemäß ist in der Sperrposition zumindest bereichsweise um das Steckelement, insbesondere zwischen dem Sperrmittel und dem Auflageelement, ein Freiraum ausgebildet wodurch das Steckelement in Richtung des Öffnungsrandes bewegbar ist, sodass das Sperrmittel in eine Freigabeposition bringbar ist, in welcher das Sperrmittel zumindest teilweise vom Öffnungsrand freigebbar oder freigegeben ist. Somit kann das Steckelement einen umlaufenden Bereich aufweisen, welcher insbesondere einen Teil der Außenwand der Vorrichtung bilden kann. Der umlaufende Bereich kann ferner einen geringeren Durchmesser umfassen, als die Öffnung, so dass der Freiraum auch bei eingesetzter Vorrichtung in die Öffnung zumindest teilweise erhalten bleibt. Der Freiraum kann somit auch als Ausbuchtung oder als Ausnehmung bezeichnet werden. Durch den Freiraum erhält das Steckelement eine Beweglichkeit innerhalb der Öffnung, welche insbesondere durch einen Benutzer der Vorrichtung nutzbar sein kann, um die Vorrichtung zwischen der Sperrposition und der Freigabeposition zu verstellen. Der Freiraum kann somit ermöglichen, dass der Öffnungsrand in der Freigabeposition in den Freiraum eingreift, sodass gegenüberliegend des Freiraums die Vorrichtung in der Öffnung derart positioniert ist, dass diese bspw. durch eine Kippbewegung in eine Position bringbar ist, in welcher das Herausziehen des Steckelementes aus der Öffnung möglich ist. Entsprechend kann durch den Freiraum durch eine Kippbewegung ein Einsetzen der Vorrichtung in die Öffnung ermöglicht sein. Somit ergibt sich eine einfache, intuitive Bedienung der Vorrichtung, welche gleichzeitig eine Befestigung ermöglicht, durch welche das Herausziehen des Steckelementes aus der Öffnung verhinderbar ist.

Vorteilhafterweise kann bei einer erfindungsgemäßen Vorrichtung am Steckelement zumindest ein Positionierungsmittel vorgesehen sein, durch welches das Steckelement in der Öffnung zentrierbar ist. Vorzugsweise können zwei, drei oder vier Positionierungsmittel vorgesehen sein. Das zumindest eine Positionierungsmittel kann vorteilhafterweise rippenartig ausgebildet sein, sodass ein Austritt von Dampf aus dem Kochgefäß seitlich des zumindest einen Positionierungsmittel möglich ist, während das zumindest eine Positionierungsmittel in der Sperrposition vorzugsweise mit dem Öffnungsrand in Kontakt bringbar ist. Insbesondere kann das zumindest eine Positionierungsmittel elastisch verformbar ausgebildet sein, sodass bei einer Bewegung des Steckelementes in Richtung des Öffnungsrandes das Positionierungsmittel einfedert und die Zentrierung in der Öffnung automatisch ermöglicht, wenn bspw. ein Benutzer keine äußere Kraft auf die Vorrichtung aufbringt. Durch das zumindest eine Positionierungsmittel kann ein gleichmäßiger Dampfaustritt zwischen dem Steckelement und dem Öffnungsrand somit in definierter Art und Weise erfolgen und gleichzeitig eine zuverlässige Positionierung der Vorrichtung bzw. des Sperrelementes in der Sperrposition ermöglichen.

Vorzugsweise kann das Auflageelement bei einer erfindungsgemäßen Vorrichtung einen Kragen aufweisen, welcher das Steckelement vollumfänglich umschließt. Durch den Kragen kann somit ein Spritzschutz gegeben sein, welcher ein unkontrolliertes Herausspritzen von Zutaten und/oder Speisen der Öffnung des Kochgefäßes zumindest in der Sperrposition verhindert. Gleichzeitig kann durch den Kragen in einfacher Art und Weise die Funktion des Auflageelementes zur Auflage auf dem Öffnungsrand realisiert sein, sodass der Kragen mehrere Funktionen erfüllen kann. Dadurch kann sich eine besonders einfache Ausgestaltung der Vorrichtung ergeben, sodass die Herstellkosten gering sein können.

Es ist ferner denkbar, dass bei einer erfindungsgemäßen Vorrichtung das Auflageelement ein Aufstandsmittel aufweist, mit welchem das Auflageelement auf dem Öffnungsrand zur Auflage bringbar ist. Vorzugsweise kann dabei das Aufstandsmittel zumindest eine Unterbrechung aufweisen, wobei das Auflageelement bei der Auflage auf dem Öffnungsrand zum Öffnungsrand im Bereich der Unterbrechung beabstandet ist. Vorzugsweise kann das Aufstandsmittel ferner am Kragen, insbesondere am äußeren Durchmesser des Kragens, angeordnet sein und/oder eine Höhe von unter 5 mm, vorzugsweise unter 4 mm aufweisen. Ferner kann das Aufstandsmittel vorteilhafterweise zumindest tlw. einen sich zur Aufstandsfläche verjüngenden Querschnitt aufweisen, sodass auch auf einer schrägen Fläche eine Kippgefahr reduziert ist und ein definierter Aufstand gewährleistet ist. Das Aufstandsmittel kann vorzugsweise aus einem elastischen Material ausgebildet sein, insbesondere sodass eine Akustik bei Vibration des Aufstandsmittels verbessert ist. Durch die Unterbrechung des Aufstandsmittels kann ferner ein Dampfaustritt am Aufstandsmittel vorbei ermöglicht sein, wenn das Aufstandsmittel auf dem Öffnungsrand aufliegt. Gleichzeitig kann durch die Unterbrechung ein definierter Dampfaustritt auf Grundlage der Unterbrechungsweite der Unterbrechung vorgegeben sein.

Es kann ferner bei einer erfindungsgemäßen Vorrichtung vorgesehen sein, dass sich vom Auflageelement ein Funktionselement erstreckt, welches bei Auflage des Auflageelementes auf dem Öffnungsrand durch einen Benutzer greifbar ist. Somit kann das Funktionselement einen Griff umfassen, welcher insbesondere vom Auflageelement hervorragt oder sich parallel oder im Wesentlichen parallel zum Auflageelement erstreckt, sodass in eine Mulde des Griffes eingegriffen werden kann, um die Vorrichtung bspw. vom Kochgefäß abzunehmen. Zusätzlich oder alternativ kann das Funktionselement eine Wandung umfassen, welche der Benutzer greifen kann, um die Vorrichtung vom Kochgefäß zu entfernen. Dabei kann die Wandung vorzugsweise weitere Funktionen der Vorrichtung ermöglichen.

Im Rahmen der Erfindung ist ferner denkbar, dass ein erstes Material und ein zweites Material vorgesehen sind. Vorzugsweise kann dabei das erste Material eine geringere Härte aufweisen als das zweite Material und/oder das Auflageelement kann das erste Material aufweisen und das Funktionselement das zweite Material. Insbesondere kann das zweite und/oder das zweite Material, insbesondere jeweils, einen Kunststoff aufweisen. Unter der Härte des ersten und/oder zweiten Materials kann vorzugsweise eine Shore-Härte verstanden werden. Insbesondere kann die Vorrichtung somit als 2K-Kunststoffspritzgussteil ausgestaltet sein. Dadurch können sich zum einen geringe Herstellkosten ergeben und zum anderen können vorteilhafterweise zwei Materialien kombiniert werden. So ist es bspw. denkbar, dass sich das erste und das zweite Material in ihrem Temperaturkoeffizienten unterscheiden, sodass bspw. das erste Material eine höhere Temperaturleitfähigkeit aufweist als das zweite Material. Somit kann bspw. das Funktionselement auch bei Hitzeeinwirkung auf die Vorrichtung noch durch einen Benutzer bei angenehmer Temperatur greifbar sein. Weist das erste Material eine geringere Härte auf als das zweite Material kann ferner vorgesehen sein, dass bspw. das erste Material schalldämpfend wirkt, während das zweite Material eine höhere Beständigkeit gegenüber Umwelteinflüssen aufweisen kann. Dadurch kann bspw. die Lebensdauer des Funktionselementes mit dem zweiten Material gesteigert sein, während gleichzeitig vorteilhafte Eigenschaften der Vorrichtung in Bezug auf die akustischen Eigenschaften im Betrieb des Kochgefäßes, d. h. insbesondere während eines Kochvorgangs, realisiert sein können. Vorzugsweise können solche Abschnitte der Vorrichtung das erste Material aufweisen, welche bei bestimmungsgemäßem Gebrauch der Vorrichtung mit dem Öffnungsrand in Kontakt bringbar sind.

Es ist ferner denkbar, dass bei einer erfindungsgemäßen Vorrichtung eine Stellfläche vorgesehen ist, mit welcher die Vorrichtung abseits des Kochgefäßes abstellbar ist. Vorzugsweise kann dabei das Steckelement die Stellfläche aufweisen und/oder die Stellfläche kann einen Rutschschutz aufweisen. Durch die Stellfläche kann ein definierter Stand der Vorrichtung vorgesehen sein, wenn die Vorrichtung abseits des Kochgefäßes, d. h. z. B. neben dem Kochgefäß, abgestellt wird. Dadurch ist bspw. eine definierte Platzierung der Vorrichtung in einem Küchenregal möglich, sodass ein positiver Eindruck eines Benutzers der Vorrichtung gefördert sein kann. Insbesondere kann durch die Stellfläche gleichzeitig in der Sperrposition ein Bereich der Öffnung verschlossen sein. Insbesondere kann die Stellfläche einen Endbereich des Steckelementes ausbilden. Durch den Rutschschutz, welcher bspw. als umlaufende Weichkomponente vorgesehen sein kann und/oder aus dem ersten Material ausgebildet sein kann, kann ferner eine Standsicherheit der Vorrichtung abseits des Kochgefäßes verbessert sein. Insbesondere kann die Stellfläche somit besonders vorteilhaft sein, wenn die Vorrichtung zumindest tlw. befüllbar ist.

Im Rahmen der Erfindung ist ferner denkbar, dass bei Auflage des Auflageelementes auf dem Öffnungsrand durch das zumindest eine Positionierungsmittel und/oder durch die Unterbrechung mit dem Öffnungsrand ein Dampfpfad ausbildbar ist. Vorzugsweise kann dabei das Steckelement und/oder der Kragen durch das zumindest eine Positionierungsmittel und/oder durch das Aufstandsmittel vom Öffnungsrand beabstandet anordbar sein. Durch die Ausbildung des Dampfpfades kann der Dampfpfad somit definiert vorgegeben sein, insbesondere sodass Kochbedingungen innerhalb des Kochgefäßes vereinheitlicht oder definiert sein können. Somit kann vorherbestimmt sein, bei welchen Temperatur- und/oder Druckverhältnissen innerhalb des Kochgefäßes welche Garwirkung erzielbar ist. Weiterhin kann durch den Dampfpfad ein Mindestaustausch eines Aufnahmeraums für Speisen und/oder Zutaten innerhalb des Kochgefäßes mit der Umgebung zur Verfügung gestellt werden, vorzugsweise ohne dass ein Spritzschutz aufgehoben werden muss. Vorzugsweise kann der Dampf somit insbesondere durch den Freiraum, am Positionierungsmittel vorbei, durch die Unterbrechung hindurch, das Kochgefäß verlassen, während die Vorrichtung die Öffnung zumindest tlw. verschließt. Somit kann sich eine Kombination verschiedenster Funktionen der zuvor genannten Bauteile ergeben, welche gemeinsam den Dampfpfad ermöglichen und damit das Kocherlebnis insgesamt für den Benutzer verbessern können.

Bei einer erfindungsgemäßen Vorrichtung ist es ferner denkbar, dass das Steckelement und/oder das Funktionselement eine Kavität bilden, welche mit einer Zutat befüllbar ist. Vorzugsweise kann die Kavität ferner eine Schütte aufweisen, durch welche die Zutat aus der Kavität ausgießbar ist, und/oder die Kavität kann vorzugsweise einen Füllstandsindikator aufweisen. Die Schütte kann vorzugsweise derart zu der Unterbrechung oder zu den Unterbrechungen angeordnet sein, dass die Schütte einen für einen Benutzer sichtbaren Indikator für eine Dampfaustrittsrichtung, in welcher Dampf unterhalb des Auflageelementes aus der Öffnung entweichen kann, darstellt. Unter der Kavität kann somit ein Gefäßraum verstanden werden, welcher mit der Zutat befüllbar ist. Der Füllstandsindikator kann vorzugsweise eine Beschriftung und/oder einen abgesetzten Innenraum der Kavität umfassen, durch welchen ein Benutzer auf eine in die Kavität gefüllte Zutatenmenge schließen kann. So kann die Beschriftung bspw. eine Milliliter-Angabe umfassen oder der abgesetzte Innenraum kann auf eine Milliliter-Angabe schließen lassen. Vorzugsweise ist somit ein Messbecher in die Vorrichtung integriert. Dadurch können durch das Steckelement und/oder das Funktionselement weitere vorteilhafte Funktionen realisiert sein. Insbesondere kann durch Messbechereigenschaften in der Vorrichtung ein hoher Benutzerkomfort gegeben sein, insbesondere da die Vorrichtung sich ohnehin in der Nähe des Kochgefäßes befindet und während des Kochvorgangs einfach abgenommen werden kann, sodass die Öffnung gleichzeitig einen Zugang zum Kochgefäß ermöglicht, welcher insbesondere gleichzeitig beschränkbar ist. Unter einem beschränkten Zugang kann bspw. verstanden werden, dass die Öffnung lediglich einen geringen Durchmesser aufweist, durch welchen ein Benutzer mit seiner Hand nicht ohne weiteres hindurchgreifen kann. Dadurch kann die Sicherheit der Küchenmaschine und/oder des Kochgefäßes gesteigert sein.

Vorzugsweise kann bei einer erfindungsgemäßen Vorrichtung die Kavität zumindest tlw. in das Steckelement hineinragen, insbesondere wobei die Kavität am Steckelement einen ersten Durchmesser aufweist und am Funktionselement einen zweiten Durchmesser, wobei der erste Durchmesser geringer ist als der zweite Durchmesser. Somit kann ein abgesetzter Innenraum realisiert sein, welcher gleichzeitig als Füllstandsindikator genutzt werden kann. Ferner kann ohnehin vorhandener Bauraum des Steckelementes genutzt werden, um die Kavität auszubilden und somit bspw. eine Messbechereigenschaft der Vorrichtung zu ermöglichen. Wenn der zweite Durchmesser am Funktionselement ferner größer ist als der erste Durchmesser am Steckelement kann ferner ebenfalls Bauraum der Vorrichtung optimiert sein, da bspw. das Funktionselement am Auflageelement angeordnet sein kann, welcher vorzugsweise ebenfalls einen größeren Durchmesser aufweist als das Steckelement, um die Auflage auf den Öffnungsrand zu ermöglichen.

Im Rahmen der Erfindung ist die Vorrichtung vorzugsweise als Messbecher ausgebildet. Somit kann die Vorrichtung auch als Messbecher bezeichnet werden, wobei die Vorrichtung gleichzeitig die Funktion eines Verschlusselementes des Kochgefäßes ermöglicht. Dadurch ergeben sich verschiedenste vorteilhafte Funktionen für einen Benutzer in einem einzigen Bauteil, sodass der Benutzer bspw. auf einen separaten Messbecher verzichten und damit z. B. Platz im Küchenschrank einsparen kann.

Gemäß einem weiteren Aspekt der Erfindung ist ein Kochgefäßsystem beansprucht. Das Kochgefäßsystem weist ein Kochgefäß zur Aufnahme von Zutaten auf. Dabei ist eine erfindungsgemäße Vorrichtung vorgesehen, durch welche eine Öffnung des Kochgefäßes in einer Sperrposition zumindest tlw. verschließbar oder zumindest tlw. verschlossen ist.

Die Öffnung kann vorzugsweise in einem Abdeckelement eines Aufnahmeraums des Kochgefäßes vorgesehen sein. Vorzugsweise können im Aufnahmeraum Speisen erhitzbar sein, so dass der Aufnahmeraum insbesondere auch als Garraum bezeichnet werden kann. Das Abdeckelement kann einstückig mit einer Wandung des Aufnahmeraums vorgesehen sein oder die Wandung des Aufnahmeraums zumindest teilweise bilden. Alternativ kann das Abdeckelement Teil eines separaten Deckelbauteils sein, durch welches das Kochgefäß bzw. der Aufnahmeraum tlw. verschließbar sein kann. Vorzugsweise kann das Deckelbauteil die Öffnung aufweisen. Somit kann ermöglicht sein, dass das Kochgefäß vorzugsweise oberseitig vollständig geöffnet werden kann, wenn das Deckelbauteil abgenommen wird. Gleichzeitig ist es möglich, bspw. das Deckelbauteil während eines Kochvorgangs des Kochgefäßes zu verschließen, sodass die oberseitige Einfüllöffnung des Kochgefäßes tlw. versperrt ist und die Öffnung des Abdeckelements jedoch weiterhin bspw. eine Zugabe von Zutaten ermöglicht. Gleichzeitig kann die Öffnung des Abdeckelements derart dimensioniert sein, dass ein Benutzer nicht in das Kochgefäß hineingreifen kann, wenn dieses durch das Deckelbauteil verschlossen ist. Dadurch kann eine Sicherheit des Kochgefäßsystems gesteigert sein. Das Sperrmittel kann vorteilhafterweise einen Durchmesser aufweisen, welcher größer ist, als Öffnungsdurchmesser der Öffnung. Insbesondere kann der Durchmesser des Sperrmittels weniger als 1 mm, vorzugsweise um weniger als 0,6 mm, besonders bevorzugt um weniger als 3 mm, größer sein, als der Durchmesser der Öffnung. Dadurch kann es nicht notwendig sein, das Steckelement weit zu verstellen, um die Freigabeposition zu erreichen. Dies wiederum kann sich positiv auf eine intuitive Bedienung der Vorrichtung durch den Benutzer auswirken.

Gemäß einem weiteren Aspekt der Erfindung ist eine Küchenmaschine zum Zubereiten von Speisen beansprucht, wobei die Küchenmaschine ein Rührwerk zum Vermengen von Zutaten aufweist. Ferner ist das Rührwerk in einem Kochgefäßsystem nach Anspruch 13 angeordnet. Das Rührwerk kann vorzugsweise bodenseitig oder oberseitig des Kochgefäßsystems in einem Kochgefäß des Kochgefäßsystems angeordnet sein. Durch das Rührwerk kann eine automatische Vermengung der Zutaten ermöglicht sein, sodass das Rührwerk und das Kochgefäßsystem, insbesondere eine erfindungsgemäße Vorrichtung des Kochgefäßsystems, ein definiertes Kochergebnis ermöglichen können. Gleichzeitig kann durch das erfindungsgemäße Kochgefäßsystem die Sicherheit des Rührwerks gesteigert sein, sodass ein Benutzer nicht ohne weiteres in das Rührwerk hineingreifen kann, wenn das Rührwerk aktiviert ist.

Damit bringt ein erfindungsgemäßes Kochgefäßsystem und/oder eine erfindungsgemäße Küchenmaschine die gleichen Vorteile mit sich, wie sie ausführlich mit Bezug auf eine erfindungsgemäße Vorrichtung beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: eine erfindungsgemäße Vorrichtung in geschnittener, schematischer Ansicht in einem ersten Ausführungsbeispiel,
- Figuren 2a bis 2c: mögliche Dampfabgaben der Vorrichtung des ersten Ausführungsbeispiels in schematischen Ansichten,
- Figur 3: die Vorrichtung des ersten Ausführungsbeispiels in schematischer Ansicht von unten,
- Figuren 4a bis 4e: einen Befestigungs- bzw. Abnahmevorgang der Vorrichtung des ersten Ausführungsbeispiels an bzw. von einem Abdeckelement,
- Figur 5: eine schematische Draufsicht einer erfindungsgemäßen Vorrichtung gemäß einem weiteren Ausführungsbeispiel,
- Figur 6: eine erfindungsgemäße Küchenmaschine mit einem erfindungsgemäßen Kochgefäß in schematischer Ansicht in einem weiteren Ausführungsbeispiel.

In den nachfolgenden Figuren werden für die gleichen technischen Merkmale, auch von unterschiedlichen Ausführungsbeispielen, die identischen Bezugszeichen verwendet.

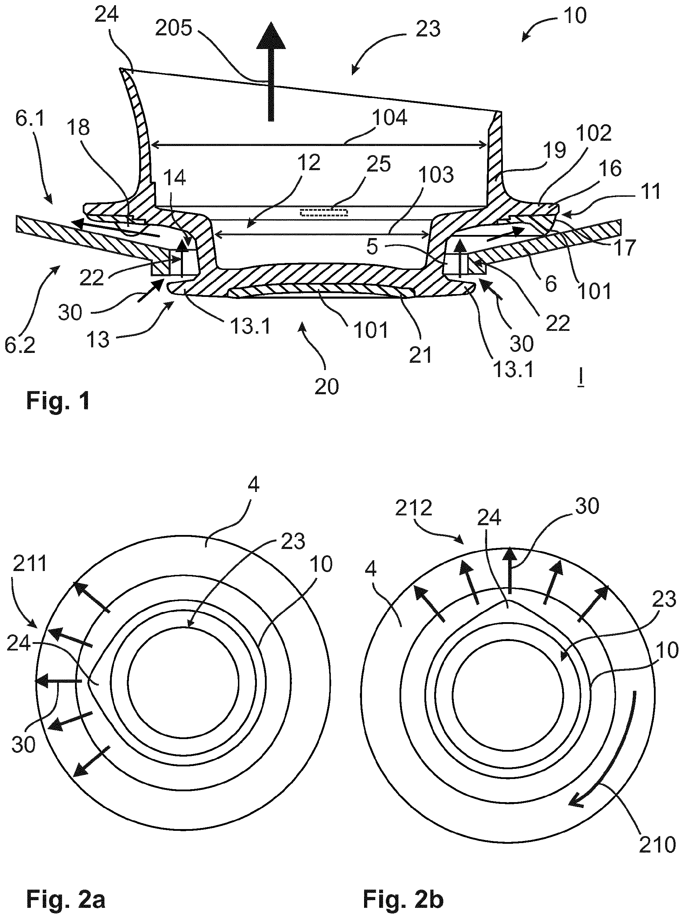

Figur 1 zeigt eine erfindungsgemäße Vorrichtung 10 zum zumindest tlw. Verschließen einer Öffnung 5 eines Kochgefäßes 2, wobei die Vorrichtung 10 in der in Figur 1 dargestellten Ansicht in die Öffnung 5 eingesetzt ist. Dabei weist die Vorrichtung 10 ein Auflageelement 11 auf, welches auf einem Öffnungsrand 6 der Öffnung 5 des Kochgefäßes 2 zur Auflage gebracht ist. Dazu weist das Auflageelement 11 ferner ein Aufstandsmittel 17 in Form einer zumindest tlw. umlaufenden Rippe auf, welche sich zur Aufstandsfläche, mittels welcher das Aufstandsmittel 17 auf dem Öffnungsrand 6 aufliegt, im Querschnitt verjüngt. Das Auflageelement 11 ist ferner, insbesondere einstückig, mit einem Steckelement 12 verbunden, wobei das Steckelement 12 zumindest tlw. durch die Öffnung 5 hindurchgesteckt ist. Um ein Herausziehen 205 des Steckelementes 12 aus der Öffnung 5 zu verhindern, weist das Steckelement 12 ferner ein Sperrmittel 13 auf, welches in einer Sperrposition I dargestellt ist. In der Sperrposition I wirkt das Sperrmittel 13 mit dem Öffnungsrand 6 derart zusammen, dass das Herausziehen 205 des Steckelementes 12 aus der Öffnung 5 verhindert ist. Dazu umgreifen das Auflageelement 11 und das Steckelement 12 mit dem Sperrmittel 13 den Öffnungsrand 6 zumindest tlw., sodass in der Sperrposition I ein Formschluss des Sperrmittels 13 mit dem Öffnungsrand 6 hergestellt ist. Dabei ist das Auflageelement 11 mit dem Aufstandsmittel 17 auf einer ersten Seite 6.1 des Öffnungsrandes 6 zur Auflage gebracht, während zumindest ein Sperrelement 13.1, vorzugsweise zwei Sperrelemente 13.1, des Sperrmittels 13 in Form eines Rasthakens auf einer zweiten Seite 6.2 des Öffnungsrandes 6 positioniert ist. Dabei weist das Sperrmittel 13 jedoch ein Spiel, d. h. einen Abstand zum Öffnungsrand 6 auf, sodass die Vorrichtung 10 in Bezug auf das Kochgefäß 2 weiterhin beweglich ist. Zumindest bereichsweise zwischen dem Sperrmittel 13 und dem Auflageelement 11 ist ferner ein Freiraum 14 umlaufend um das Steckelement 12 und in der Sperrposition I zwischen dem Steckelement 12 und dem Öffnungsrand 6 ausgebildet. In diesem Freiraum 14 kann Dampf 30 aus dem Inneren des Kochgefäßes 2 nach außen gelangen, wobei der Dampf 30 entlang eines Dampfpfades strömt. Der Dampfpfad 22 verläuft durch den Freiraum 14 und unterhalb eines Kragens 16 des Auflageelementes 11. Der Kragen 16 bietet neben der Funktionalität der Ausbildung des Dampfpfades 22 gleichzeitig einen Spritzschutz, sodass beim Zubereiten von Speisen im Kochgefäß 2 diese nicht aus dem Kochgefäß 2 herausspritzen. Ferner ist der Dampfpfad 22 durch Unterbrechungen 18 gebildet, welche im Aufstandsmittel 17 vorgesehen sind, sodass das Auflageelement 11 im Bereich der Unterbrechungen 18 in der Sperrposition I zum Öffnungsrand 6 bzw. zu einem Abdeckelement 4 des Kochgefäßes 2 aufweist. Dadurch kann auch bei Dampfentwicklung im Kochgefäß 2 der Dampf 30 definiert entweichen. Dadurch können zum einen die Kochbedingungen im Kochgefäß 2 verbessert sein, sodass diese ebenfalls definiert vorhanden sind und zum anderen kann die Umgebung des Kochgefäßes 2 vor unkontrolliertem Dampf geschützt sein. Aufgrund von Druck- und/oder Temperaturschwankungen im Inneren des Kochgefäßes 2 kann es dazu kommen, dass auch in der Sperrposition I die Vorrichtung 10 Bewegungen, insbesondere Vibrationen, unterliegt. Insbesondere weist die Vorrichtung 10 daher ein erstes Material 101 und ein zweites Material 102 auf, vorzugsweise wobei das erste Material 101 eine geringere Härte aufweist als das zweite Material 102. Insbesondere können das Aufstandsmittel 17 und/oder ein Rutschschutz 21 das erste Material 101 aufweisen oder aus dem ersten Material 101 bestehen. Vorzugsweise kann sich das erste Material 101 zumindest bereichsweise, insbesondere als verbundener Bereich, über den Kragen 16 und eine Stellfläche 20 der Vorrichtung 10 erstrecken. Der Rutschschutz 21 kann vorzugsweise an der Stellfläche 20 angeordnet sein, wobei die Stellfläche 20 vorzugsweise einen Bodenabschnitt des Steckelementes 12 bildet, welcher das Steckelement 12 zumindest tlw. verschließt. Durch die Stellfläche 20, insbesondere mit dem Rutschschutz 21, ist es möglich, die Vorrichtung 10 in einer definierten Lage abseits des Kochgefäßes 2 sicher abzustellen. Dies begünstigt die Verwendung der Vorrichtung 10 als Messbecher. Dazu weist die Vorrichtung 10 ferner eine Kavität 23 auf, welche durch ein Funktionselement 19 und das Steckelement 12 gebildet ist. Insbesondere kann die Kavität 23 mittels des zweiten Materials 102 gebildet sein, um eine hohe Beständigkeit gegenüber Flüssigkeiten im Inneren der Kavität 23 zu gewährleisten. Das Funktionselement 19 kann ferner von einem Benutzer dazu genutzt werden, die Vorrichtung 10 zu greifen, um diese auch bei Dampfaustritt unterhalb des Kragens 16 noch sicher und komfortabel vom Öffnungsrand 6 abnehmen zu können. Somit ist die Kavität 23 vorzugsweise mit Zutaten befüllbar, sodass die Vorrichtung 10 vom Kochgefäß 2 entnommen werden kann und somit die Öffnung 5 freigebbar ist. Bei freigegebener Öffnung 5 kann daraufhin vorgesehen sein, dass die Vorrichtung 10 mit Zutaten entsprechend einer z. B. durch ein Rezept vorgegebenen Menge befüllt wird und diese Zutaten durch die Öffnung 5 in das Kochgefäß 2 hineingegeben werden können. Vorzugsweise ist die Öffnung 5 dabei derart dimensioniert, dass ein Benutzer nicht mit seiner Hand durch die Öffnung 5 in das Kochgefäß 2 hineingreifen kann. Dadurch kann die Sicherheit des Kochgefäßes 2 gesteigert sein, insbesondere wenn dieses in einer Küchenmaschine 1 mit einem Rührwerk 7 verwendet wird. Zur Verbesserung der Messbecherfunktionalität kann die Vorrichtung 10 insbesondere in der Kavität 23 ferner einen Füllstandsindikator 25 aufweisen, wobei der Füllstandsindikator 25 vorteilhafterweise eine Beschriftung und/oder einen Absatz umfassen kann. Durch die Beschriftung und/oder den Absatz kann ein Benutzer eine bereits eingefüllte Menge an Zutaten in die Kavität 23 abschätzen. Der Absatz kann beispielsweise dadurch gebildet sein, dass die Kavität 23 am Steckelement 12 einen ersten Durchmesser 103 aufweist und am Funktionselement 10 einen zweiten Durchmesser 104, wobei der erste Durchmesser 103 vorzugsweise geringer ist als der zweite Durchmesser 104. Um die Zutaten in komfortabler Art und Weise aus der Vorrichtung 10 bzw. der Kavität 23 ausgießen zu können, weist das Funktionselement 19 vorteilhafterweise eine Schütte 24 auf.

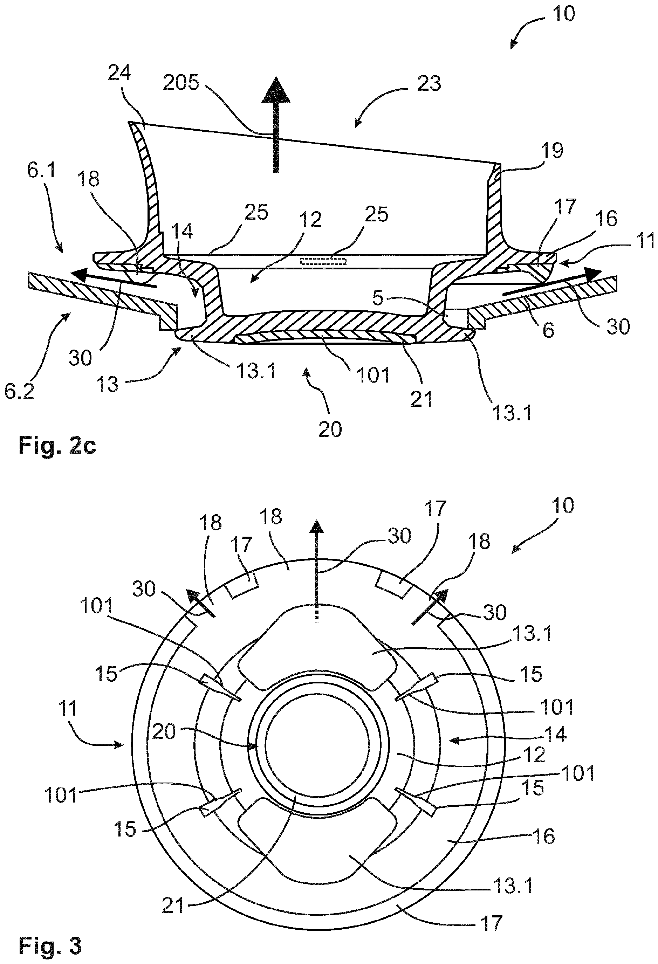

Die Figuren 2a bis 2c zeigen ferner die erfindungsgemäße Vorrichtung 10 des ersten Ausführungsbeispiels in weiteren Ansichten bzw. Positionen. Dabei zeigt Figur 2a einen Dampfaustritt von Dampf 30 in einer definierten ersten Dampfaustrittsrichtung 211 unterhalb der Vorrichtung 10 entlang eines Abdeckelements 4 des Kochgefäßes 2, wobei das Abdeckelement 4 einen Aufnahmeraum 3 des Kochgefäßes 2 zumindest bereichsweise verschließt. Insbesondere ist das Abdeckelement 4 als separates Bauteil vom Aufnahmeraum 3 ausgebildet. Die Kavität 23 ist dabei in nach oben offener Position gezeigt, wobei ebenfalls denkbar ist, dass die Kavität 23 in der Sperrposition I zum Aufnahmeraum 3 des Kochgefäßes 2 geöffnet ist. Figur 2b zeigt die erfindungsgemäße Vorrichtung 10 nach einer Drehbewegung 210, wobei sich jedoch die Vorrichtung 10 mit dem Sperrmittel 13 weiterhin in der Sperrposition I befindet und somit am Abdeckelement 4 befestigt ist. Durch die Drehbewegung 210 um 90° ist dabei jedoch die erste Dampfaustrittsrichtung 211 in eine zweite Dampfaustrittsrichtung 212 ebenfalls um 90° verstellt worden. Somit kann ein Benutzer die Dampfaustrittsrichtung entsprechend der Ausrichtung des Kochgefäßes 2 durch eine Drehbewegung 210 der Vorrichtung 10 vorgeben. Vorzugsweise ist die Schütte 24 derart zu den Unterbrechungen 18 angeordnet, dass die Schütte 24 einen für den Benutzer sichtbaren Indikator für die Dampfaustrittsrichtung 211, 212 darstellt. Dazu kann die Schütte 24 vorzugsweise im Wesentlichen mittig zu den Unterbrechungen 18 angeordnet sein. Figur 2c zeigt ferner die Vorrichtung 10 des ersten Ausführungsbeispiels, wobei das Sperrmittel 13 am Öffnungsrand 6 anliegt, sodass das Aufstandsmittel 17 vom Öffnungsrand 6 beabstandet ist. Dies kann bspw. eine Situation darstellen, in welcher ein hoher Überdruck im Kochgefäß 2 vorhanden ist, durch welchen die Vorrichtung 10 relativ zum Öffnungsrand 6 abhebt und dadurch unterhalb des Aufstandsmittels 17 bzw. der Unterbrechungen 18 einen vergrößerten Querschnitt zum Austritt von Dampf 30 freigibt. Gleichzeitig kann jedoch durch das Sperrmittel 13 sichergestellt werden, dass sich die Vorrichtung 10 nicht vollständig vom Abdeckelement 4 bzw. vom Kochgefäß 2 löst.

Figur 3 zeigt ferner eine Draufsicht von unten auf die erfindungsgemäße Vorrichtung 10 des ersten Ausführungsbeispiels, wobei die Vorrichtung 10 in der Darstellung der Figur 3 von dem Abdeckelement 4 gelöst ist. Dabei sind ferner Positionierungsmittel 15 in Form von vier Rippen gezeigt. Die Positionierungsmittel 15 erstrecken sich vom Steckelement 12 und vom Auflageelement 11 in den Freiraum 14. Wird das Steckelement 12 durch die Öffnung 5 hindurchgesteckt, wirken die Positionierungsmittel 15 mit dem Öffnungsrand 6, sodass das Steckelement 12 in der Öffnung 5 zentriert wird. Dazu weisen die Positionierungsmittel 15 vorzugsweise das erste Material 101 auf, sodass die Positionierungsmittel 15 elastisch verformbar sind.

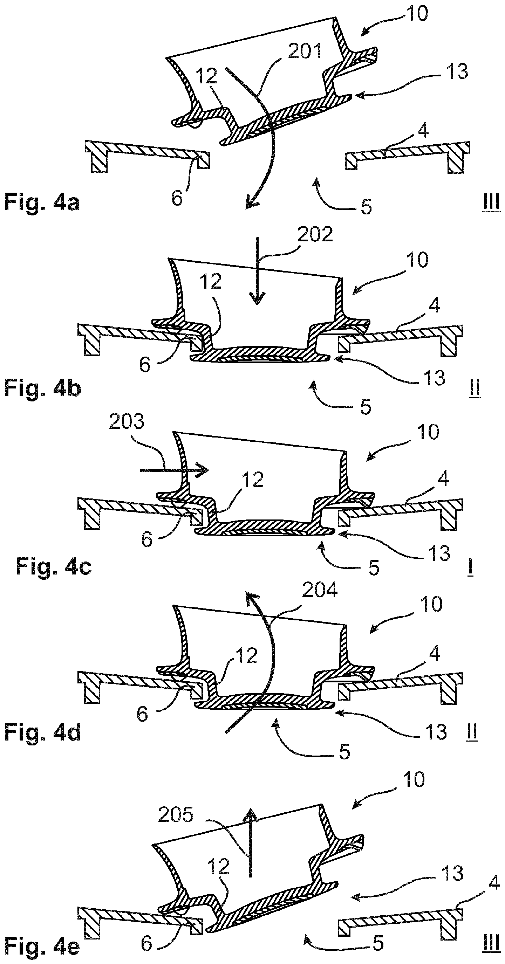

Die Figuren 4a bis 4c zeigen ferner ein Einsetzen der Vorrichtung 10 des ersten Ausführungsbeispiels in die Öffnung 5 des Abdeckelements 4. Dazu wird die Vorrichtung 10 zunächst gemäß Fig. 4a in eine Kippposition III gebracht, in welcher das dadurch schräg angestellte Sperrmittel 13, insbesondere mit zumindest einem oder mit beiden Sperrelementen 13.1, durch die Öffnung 5 hindurch passt. Dabei kann die Vorrichtung 10 unter einer ersten Kippbewegung 201 in die Öffnung 5 eingesetzt werden. Um das Auflageelement 11 auf dem Öffnungsrand 6 zu positionieren erfolgt dabei gemäß Fig. 4b ein Hindurchstecken 202 des Steckelementes 12 durch die Öffnung 5. Bei dem Hindurchstecken 202 bzw. bei der ersten Kippbewegung 201, welche vorzugsweise kombiniert erfolgen können, kommen ferner zwei der Positionierungsmittel 15 mit dem Öffnungsrand 6 in Kontakt und federn elastisch ein. Insbesondere ist das Sperrmittel 13 dabei in einer Freigabeposition II. Sobald der Benutzer die Vorrichtung 10 loslässt erfolgt gemäß Fig. 4c automatisch ein Zentrieren 203 durch die Positionierungsmittel 15, indem diese zurück in ihre ursprüngliche Form und/oder Position federn. Die den eingefederten Positionierungsmitteln 15 gegenüberliegenden Positionierungsmittel 15 sorgen dabei mit dafür, dass eine mittige Position der Vorrichtung 10 in Bezug auf die Öffnung 5 gehalten wird. Dies entspricht der Sperrposition I, wobei das Sperrmittel 13 zumindest tlw. einen Formschluss mit dem Öffnungsrand 6 herstellt. Figur 4d zeigt den Beginn einer Öffnungsbewegung der Vorrichtung 10, wobei zunächst die Vorrichtung 10 entgegengesetzt zum Zentrieren 203 derart bewegt wird, dass der Öffnungsrand 6 in den Freiraum 14 der Vorrichtung 10 eindringt, sodass eine Freigabeposition II erreicht wird, in welcher das Sperrelement 13 vom Öffnungsrand 6 freigebbar ist. Daraufhin kann mittels einer zweiten Kippbewegung 204 das Sperrmittel 13 durch die Öffnung 5 bewegt werden, sodass schließlich gemäß Figur 4e ein Herausziehen 205 der Vorrichtung 10 aus der Öffnung 5 möglich ist. Während des Herausziehens 205 befindet sich dabei die Vorrichtung 10 vorzugsweise wieder in einer Kippposition III.

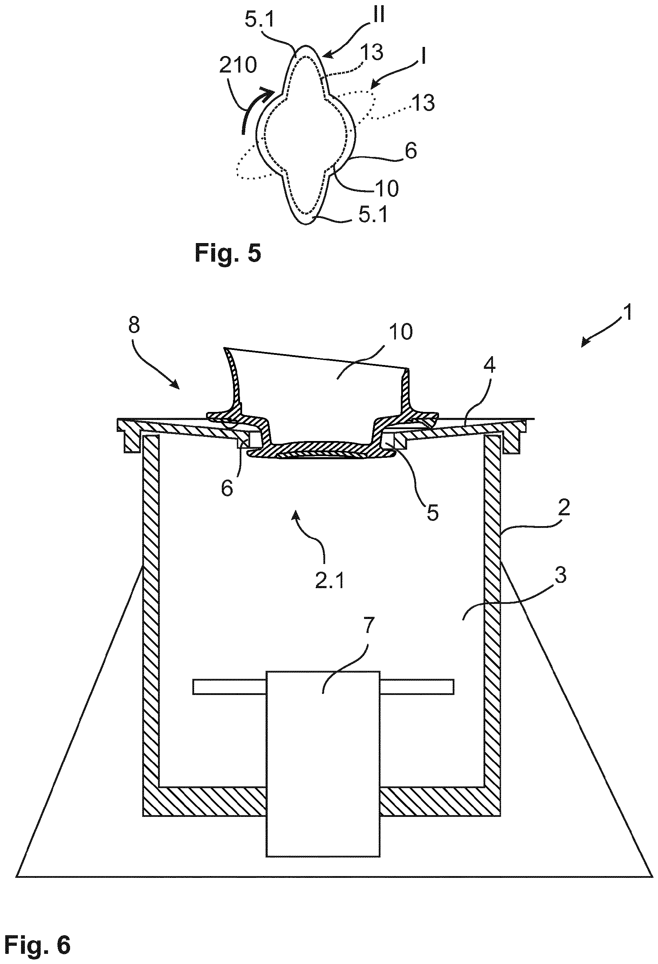

Figur 5 zeigt ferner eine erfindungsgemäße Vorrichtung 10 in einer schematischen Draufsicht, welche durch eine Öffnung 5 eines Kochgefäßes 2 zumindest tlw. hindurchgesteckt ist. Dabei weist die Vorrichtung 10 ein Sperrmittel 13 auf, welches durch Ausnehmungen 5.1 der Öffnung 5 gerade hindurchgesteckt werden kann. Anschließend kann eine Drehbewegung 210 das Sperrelement 13 von einer Freigabeposition II in eine Sperrposition I (gestrichelt dargestellt) überführen, in welcher das Sperrmittel 13 mit einem Öffnungsrand 6 der Öffnung 5 einen Formschluss herstellt und damit die Vorrichtung 10 in der Öffnung 5 gesichert ist.

Figur 6 zeigt ferner eine Küchenmaschine 1, welche ein Kochgefäßsystem 8 umfasst, in einem weiteren Ausführungsbeispiel. Dabei ist ein Rührwerk 7 der Küchenmaschine 1 zum automatischen oder semiautomatischen Zubereiten von Speisen in dem Kochgefäßsystem 8, insbesondere bodenseitig eines Kochgefäßes 2, angeordnet. Das Kochgefäß 2 weist ferner einen Aufnahmeraum 3 zur Aufnahme von Zutaten und/oder Speisen auf. Vorzugsweise können die Zutaten in dem Aufnahmeraum 3 gegart werden. Ferner ist ein Abdeckelement 4 vorgesehen, welcher das Kochgefäß 2 an einer Einfüllöffnung 2.1 des Kochgefäßes 2 zumindest tlw. verschließt. Das Abdeckelement 4 kann dabei einstückig mit einer Wandung des Aufnahmeraums 3 oder als separates Bauteil ausgeführt sein. Ferner weist das Abdeckelement 4 eine Öffnung 5 auf, durch welche der Aufnahmeraum 3 zumindest tlw. von außen mit Zutaten befüllt werden kann. Zum Verschließen der Öffnung 5 ist ferner eine erfindungsgemäße Vorrichtung 10 vorgesehen, welche in einer Sperrposition I die Öffnung 5 zumindest tlw. verschließt. Vorzugsweise kann die Vorrichtung 10 gemäß einem der vorhergehenden Ausführungsbeispiele, besonders bevorzugt gemäß dem ersten Ausführungsbeispiel, ausgebildet sein.

Die voranstehenden Erläuterungen der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden ohne den Rahmen der vorliegenden Erfindung zu verlassen.

### Bezugszeichenliste

- 1: Küchenmaschine
- 2: Kochgefäß
- 2.1: Einfüllöffnung
- 3: Aufnahmeraum
- 4: Abdeckelement
- 5: Öffnung
- 5.1: Ausnehmung
- 6: Öffnungsrand
- 6.1: erste Seite von 6
- 6.2: zweite Seite von 6
- 7: Rührwerk
- 8: Kochgefäßsystem

- 10: Vorrichtung
- 11: Auflageelement
- 12: Steckelement
- 13: Sperrmittel
- 13.1: Sperrelement
- 14: Freiraum
- 15: Positionierungsmittel
- 16: Kragen
- 17: Aufstandsmittel
- 18: Unterbrechung
- 19: Funktionselement
- 20: Stellfläche
- 21: Rutschschutz
- 22: Dampfpfad
- 23: Kavität
- 24: Schütte
- 25: Füllstandsindikator
- 30: Dampf

- 101: erstes Material
- 102: zweites Material
- 103: erster Durchmesser
- 104: zweiter Durchmesser

- 201: erste Kippbewegung
- 202: Hindurchstecken
- 203: Zentrieren
- 204: zweite Kippbewegung
- 205: Herausziehen

- 210: Drehbewegung
- 211: erste Dampfaustrittsrichtung
- 212: zweite Dampfaustrittsrichtung

- I: Sperrposition
- II: Freigabeposition
- III: Kippposition

## Patentansprüche

1. Vorrichtung (10) zum zumindest teilweisen Verschließen einer Öffnung (5) eines Kochgefäßes (2), aufweisend
ein Auflageelement (11), welches auf einem Öffnungsrand (6) der Öffnung (5) des Kochgefäßes (2) zur Auflage bringbar ist, und
ein Steckelement (12), welches zumindest teilweise durch die Öffnung (5) hindurchsteckbar ist,
wobei das Steckelement (12) ein Sperrmittel (13) aufweist, welches in eine Sperrposition (I) bringbar ist, in welcher das Sperrmittel (13) mit dem Öffnungsrand (6) zusammenwirkt, so dass ein Herausziehen (205) des Steckelementes (12) verhindert ist,
**dadurch gekennzeichnet,**
**dass** in der Sperrposition (I) zumindest bereichsweise um das Steckelement (12) ein Freiraum (14) ausgebildet ist, wodurch das Steckelement (12) in Richtung des Öffnungsrandes (6) bewegbar ist, so dass das Sperrmittel (13) in eine Freigabeposition (II) bringbar ist, in welcher das Sperrmittel (13) zumindest teilweise vom Öffnungsrand (6) freigebbar ist.

2. Vorrichtung (10) nach Anspruch 1,
**dadurch gekennzeichnet,**
**dass** das Auflageelement (11) in der Sperrposition (I) auf einer ersten Seite (6.1) des Öffnungsrandes (6) zur Auflage bringbar ist und das Sperrmittel (13) in der Sperrposition (I) auf einer zweiten Seite (6.2) des Öffnungsrandes (6) positionierbar ist, so dass das Steckelement (12) mit dem Sperrmittel (13) und das Auflageelement (11) den Öffnungsrand (6) zumindest teilweise umgreifen.

3. Vorrichtung (10) nach einem der Ansprüche 1 oder 2,
**dadurch gekennzeichnet,**
**dass** am Steckelement (12) zumindest ein Positionierungsmittel (15) vorgesehen ist, durch welches das Steckelement (12) in der Öffnung (5) zentrierbar ist.

4. Vorrichtung (10) nach einem der vorhergehenden Ansprüche,
**dadurch gekennzeichnet,**
**dass** das Auflageelement (11) einen Kragen (16) aufweist, welcher das Steckelement (12) vollumfänglich umschließt.

5. Vorrichtung (10) nach einem der vorhergehenden Ansprüche,
**dadurch gekennzeichnet,**
**dass** das Auflageelement (11) ein Aufstandsmittel (17) aufweist, mit welchem das Auflageelement (11) auf dem Öffnungsrand (6) zur Auflage bringbar ist, insbesondere wobei das Aufstandsmittel (17) zumindest eine Unterbrechung (18) aufweist, wobei das Auflageelement (11) bei der Auflage auf dem Öffnungsrand (6) zum Öffnungsrand (6) im Bereich der Unterbrechung (18) beabstandet ist.

6. Vorrichtung (10) nach einem der vorhergehenden Ansprüche,
**dadurch gekennzeichnet,**
**dass** sich vom Auflageelement (11) ein Funktionselement (19) erstreckt, welches bei Auflage des Auflageelementes (11) auf dem Öffnungsrand (6) durch einen Benutzer greifbar ist.

7. Vorrichtung (10) nach einem der vorhergehenden Ansprüche,
**dadurch gekennzeichnet,**
**dass** ein erstes Material (101) und ein zweites Material (102) vorgesehen sind, insbesondere wobei das erste Material (101) eine geringere Härte aufweist, als das zweite Material (102) und/oder wobei das Auflageelement (11) das erste Material (101) aufweist und das Funktionselement (102) das zweite Material (102).

8. Vorrichtung (10) nach einem der vorhergehenden Ansprüche,
**dadurch gekennzeichnet,**
**dass** eine Stellfläche (20) vorgesehen ist, mit welcher die Vorrichtung (10) abseits des Kochgefäßes (2) abstellbar ist, insbesondere wobei das Steckelement (12) die Stellfläche (20) aufweist und/oder wobei die Stellfläche (20) einen Rutschschutz (21) aufweist.

9. Vorrichtung (10) nach einem der vorhergehenden Ansprüche,
**dadurch gekennzeichnet,**
**dass** bei Auflage des Auflageelements (11) auf dem Öffnungsrand (6) durch das zumindest eine Positionierungsmittel (15) und/oder durch die Unterbrechung (18) mit dem Öffnungsrand (6) ein Dampfpfad (22) ausbildbar ist, insbesondere wobei das Steckelement (12) und/oder der Kragen (16) durch das zumindest Positionierungsmittel (15) und/oder das Aufstandsmittel (17) vom Öffnungsrand (6) beabstandet anordbar ist.

10. Vorrichtung (10) nach einem der vorhergehenden Ansprüche,
**dadurch gekennzeichnet,**
**dass** das Steckelement (12) und/oder das Funktionselement (19) eine Kavität (23) bilden, welche mit einer Zutat befüllbar ist, insbesondere wobei die Kavität (23) eine Schütte (24) aufweist, durch welche die Zutat aus der Kavität (23) ausgießbar ist, und/oder wobei die Kavität (23) zumindest einen Füllstandsindikator (25) aufweist.

11. Vorrichtung (10) nach Anspruch 10,
**dadurch gekennzeichnet,**
**dass** die Kavität (23) zumindest teilweise in das Steckelement (12) hineinragt, insbesondere wobei die Kavität (23) am Steckelement (12) einen ersten Durchmesser (103) aufweist und am Funktionselement (19) einen zweiten Durchmesser (104), wobei der erste Durchmesser (103) geringer ist, als der zweite Durchmesser (104).

12. Vorrichtung (10) nach einem der vorhergehenden Ansprüche,
**dadurch gekennzeichnet,**
**dass** die Vorrichtung (10) als Messbecher ausgebildet ist.

13. Kochgefäßsystem (8) aufweisend
ein Kochgefäß (2) zur Aufnahme von Zutaten,
**dadurch gekennzeichnet,**
**dass** eine Vorrichtung (10) nach einem der vorhergehenden Ansprüche vorgesehen ist, durch welche eine Öffnung (5) des Kochgefäßes (2) in einer Sperrposition (I) zumindest teilweise verschließbar ist.

14. Küchenmaschine (1) zum Zubereiten von Speisen aufweisend
ein Rührwerk (7) zum Vermengen von Zutaten,
**dadurch gekennzeichnet,**
**dass** das Rührwerk (7) in einem Kochgefäßsystem (8) nach Anspruch 13 angeordnet ist.

## Claims

1. Device (10) for at least partially closing an opening (5) of a cooking vessel (2), comprising
a support element (11) which can be brought to rest on an opening edge (6) of the opening (5) of the cooking vessel (2), and
a plug-in element (12) which can be at least partially inserted through the opening (5), wherein the plug-in element (12) has a blocking means (13) which can be brought into a blocking position (I) in which the blocking means (13) interacts with the opening edge (6) so that a withdrawal (205) of the plug-in element (12) is essentially prevented,
**characterized in that**,
in the blocking position (I), a free space (14) is formed at least in regions around the plug-in element (12), as a result of which the plug-in element (12) can be moved in the direction of the opening edge (6), so that the blocking means (13) can be brought into a release position (II) in which the blocking means (13) can be released at least partially from the opening edge (6).

2. Device (10) according to claim 1,
**characterized in that,**
in the blocking position (I), the support element (11) can be brought to rest on a first side (6.1) of the opening edge (6) and, in the blocking position (I), the blocking means (13) can be positioned on a second side (6.2) of the opening edge (6), so that the plug-in element (12) with the blocking means (13) and the support element (11) at least partially surround the opening edge (6).

3. Device (10) according to one of claims 1 or 2,
**characterized in that,**
at least one positioning means (15) is provided on the plug-in element (12), by means of which the plug-in element (12) can be centered in the opening (5).

4. Device (10) according to one of the preceding claims,
**characterized in that,**
the support element (11) has a collar (16) which completely encloses the plug-in element (12).

5. Device (10) according to one of the preceding claims,
**characterized in that,**
the support element (11) has a support means (17) with which the support element (11) can be brought to rest on the opening edge (6), in particular with the support means (17) having at least one interruption (18), with the support element (11), when resting on the opening edge (6), being spaced apart from the opening edge (6) in the region of the interruption (18).

6. Device (10) according to one of the preceding claims,
**characterized in that,**
a functional element (19) extends from the support element (11), which functional element (19) can be gripped by a user when the support element (11) is placed on the opening edge (6).

7. Device (10) according to one of the preceding claims,
**characterized in that,**
a first material (101) and a second material (102) are provided, in particular wherein the first material (101) has a lower hardness than the second material (102) and/or wherein the support element (11) comprises the first material (101) and the functional element (19) comprises the second material (102).

8. Device (10) according to one of the preceding claims,
**characterized in that,**
a support surface (20) is provided with which the device (10) can be placed away from the cooking vessel (2), in particular wherein the plug-in element (12) comprises the support surface (20) and/or wherein the support surface (20) comprises an anti-slip protection (21).

9. Device (10) according to one of the preceding claims,
**characterized in that,**
when the support element (11) is placed on the opening edge (6), a vapour path (22) can be formed by the at least one positioning means (15) and/or by the interruption (18) with the opening edge (6), in particular wherein the plug-in element (12) and/or the collar (16) can be arranged at a distance from the opening edge (6) by the at least one positioning means (15) and/or the support means (17).

10. Device (10) according to one of the preceding claims,
**characterized in that,**
the plug-in element (12) and/or the functional element (19) form a cavity (23) which can be filled with at least one ingredient, in particular wherein the cavity (23) has a chute (24) through which the ingredient can be poured out of the cavity (23), and/or wherein the cavity (23) has at least one level indicator (25).

11. Device (10) according to claim 10,
**characterized in that,**
the cavity (23) projects at least partially into the plug-in element (12), in particular the cavity (23) having a first diameter (103) on the plug-in element (12) and a second diameter (104) on the functional element (19), the first diameter (103) being smaller than the second diameter (104).

12. Device (10) according to one of the preceding claims,
**characterized in that,**
the device (10) is designed as a measuring cup.

13. Cooking vessel system (8) comprising
a cooking vessel (2) to hold at least one ingredient,
**characterized in that,**
a device (10) is provided in accordance with one of the preceding claims, by means of which an opening (5) of the cooking vessel (2) can be at least partially closed in a blocking position (I).

14. Food processor (1) for preparing food comprising
an stirring device (7) for mixing ingredients,
**characterized in that,**
the stirring device (7) is arranged in a cooking vessel system (8) according to claim 13.

## Revendications

1. Dispositif (10) pour fermer au moins partiellement une ouverture (5) d'un récipient de cuisson (2), comprenant
un élément de support (11) qui peut être amené à reposer sur un bord d'ouverture (6) de l'ouverture (5) du récipient de cuisson (2), et
un élément enfichable (12) qui peut être inséré au moins partiellement par l'ouverture (5), dans lequel l'élément enfichable (12) présente un moyen de blocage (13) qui peut être amené dans une position de blocage (I) dans laquelle le moyen de blocage (13) interagit avec le bord d'ouverture (6) de sorte qu'un retrait (205) de l'élément enfichable (12) est essentiellement empêché,
**caractérisé en ce que**,
dans la position de blocage (I), un espace libre (14) est formé au moins par zones autour de l'élément enfichable (12), ce qui permet de déplacer l'élément enfichable (12) en direction du bord d'ouverture (6), de sorte que le moyen de blocage (13) peut être amené dans une position de libération (II) dans laquelle le moyen de blocage (13) peut être libéré au moins partiellement du bord d'ouverture (6).

2. Dispositif (10) selon la revendication 1,
**caractérisé en ce que,**
dans la position de blocage (I), l'élément de support (11) peut être amené en appui sur un premier côté (6.1) du bord d'ouverture (6) et, dans la position de blocage (I), le moyen de blocage (13) peut être positionné sur un deuxième côté (6.2) du bord d'ouverture (6), de sorte que l'élément enfichable (12) avec le moyen de blocage (13) et l'élément de support (11) entourent au moins partiellement le bord d'ouverture (6).

3. Dispositif (10) selon l'une des revendications 1 ou 2,
**caractérisé en ce qu'**
au moins un moyen de positionnement (15) est prévu sur l'élément enfichable (12), au moyen duquel l'élément enfichable (12) peut être centré dans l'ouverture (5).

4. Dispositif (10) selon l'une des revendications précédentes,
**caractérisé en ce que,**
l'élément de support (11) comporte un collier (16) qui entoure complètement l'élément enfichable (12).

5. Dispositif (10) selon l'une des revendications précédentes,
**caractérisé en ce que,**
l'élément de support (11) présente un moyen d'appui (17) avec lequel l'élément de support (11) peut être amené en appui sur le bord d'ouverture (6), en particulier le moyen d'appui (17) présentant au moins une interruption (18), l'élément de support (11), lorsqu'il est en appui sur le bord d'ouverture (6), étant espacé du bord d'ouverture (6) dans la zone de l'interruption (18).

6. Dispositif (10) selon l'une des revendications précédentes,
**caractérisé en ce qu'**
un élément fonctionnel (19) s'étend à partir de l'élément de support (11), lequel élément fonctionnel (19) peut être saisi par un utilisateur lorsque l'élément de support (11) est placé sur le bord d'ouverture (6).

7. Dispositif (10) selon l'une des revendications précédentes,
**caractérisé en ce qu'**
un premier matériau (101) et un deuxième matériau (102) sont prévus, en particulier dans lequel le premier matériau (101) présente une dureté inférieure à celle du deuxième matériau (102) et/ou dans lequel l'élément de support (11) comprend le premier matériau (101) et l'élément fonctionnel (19) comprend le deuxième matériau (102).

8. Dispositif (10) selon l'une des revendications précédentes,
**caractérisé en ce qu'**
il est prévu une surface de support (20) avec laquelle le dispositif (10) peut être placé à l'écart du récipient de cuisson (2), en particulier dans lequel l'élément enfichable (12) présente la surface de support (20) et/ou dans lequel la surface de support (20) présente une protection antidérapante (21).

9. Dispositif (10) selon l'une des revendications précédentes,
**caractérisé en ce que**
lorsque l'élément de support (11) est placé sur le bord d'ouverture (6), un chemin de vapeur (22) peut être formé par le au moins un moyen de positionnement (15) et/ou par l'interruption (18) avec le bord d'ouverture (6), en particulier dans lequel l'élément enfichable (12) et/ou le collier (16) peut être disposé à distance du bord d'ouverture (6) par le au moins un moyen de positionnement (15) et/ou le moyen d'appui (17).

10. Dispositif (10) selon l'une des revendications précédentes,
**caractérisé en ce que**
l'élément enfichable (12) et/ou l'élément fonctionnel (19) forment une cavité (23) qui peut être remplie d'au moins un ingrédient, la cavité (23) présentant notamment une goulotte (24) à travers laquelle l'ingrédient peut être versé hors de la cavité (23), et/ou la cavité (23) présentant au moins un indicateur de niveau (25).

11. Dispositif (10) selon la revendication 10,
**caractérisé en ce que**
la cavité (23) fait saillie au moins partiellement dans l'élément enfichable (12), en particulier la cavité (23) présante un premier diamètre (103) sur l'élément enfichable (12) et un deuxième diamètre (104) sur l'élément fonctionnel (19), le premier diamètre (103) étant plus petit que le deuxième diamètre (104).

12. Dispositif (10) selon l'une des revendications précédentes,
**caractérisé en ce que**
le dispositif (10) est conçu comme une tasse à mesurer.

13. Système de récipients de cuisson (8) comprenant
un récipient de cuisson (2) pour contenir au moins un ingrédient,
**caractérisé en ce qu'**
un dispositif (10) est prévu conformément à l'une des revendications précédentes, au moyen duquel une ouverture (5) du récipient de cuisson (2) peut être au moins partiellement fermée dans une position de blocage (I).

14. Robot de cuisine (1) pour la préparation d'aliments comprenant un agitateur (7) pour le mélange des ingrédients,
**caractérisé en ce que**
l'agitateur (7) est disposé dans un système de récipient de cuisson (8) selon la revendication 13.
